# NOUVEAU FASCICULE DE BREVET EUROPEEN

(11) **EP 1 601 543 B2**
(45) Date de publication et mention de la décision concernant l'opposition: **20.07.2016**
(45) Mention de la délivrance du brevet: 16.05.2007
(21) Numéro de dépôt: 04718702.6
(22) Date de dépôt: 09.03.2004
(51) Int. Cl.: B60H 1/00

(54) **DISPOSITIF DE CHAUFFAGE-VENTILATION ET/OU CLIMATISATION DE STRUCTURE COMPACTE POUR L'HABITACLE D'UN VEHICULE AUTOMOBILE**
KOMPAKTE HEIZUNGS-, LÜFTUNGS- UND KLIMAANLAGE FÜR DEN INNENRAUM EINES KRAFTFAHRZEUGES
HEATING AND VENTILATION AND/OR AIR CONDITIONING DEVICE WITH A COMPACT CONSTRUCTION FOR A MOTOR VEHICLE PASSENGER COMPARTMENT

(30) Priorité: 13.03.2003 FR 0303116
(43) Date de publication de la demande: 07.12.2005
(73) Titulaire: VALEO SYSTEMES THERMIQUES, 78320 Le Mesnil St. Denis (FR)
(72) Inventeur: ELLIOT, Gilles, F-91080 Courcouronnes (FR); POUYSEGUR, Serge, F-78610 Le Perray en Yvelines (FR); PIERRES, Philippe, F-78310 Maurepas (FR)
(86) Numéro de dépôt international: PCT/IB2004/000790
(87) Numéro de publication internationale: WO 2004/080737

(56) Documents cités:
- EP-A- 0 607 585
- EP-A- 0 713 798
- FR-A- 2 735 426
- FR-A- 2 783 465

## Description

L'invention se rapporte aux dispositifs de chauffage-ventilation et/ou climatisation de l'habitacle des véhicules automobiles.

FR2735426 décrit un ensemble modulaire comprenant un élément pulseur, un élément de chauffage et un élément de conduit interposé entre l'élément pulseur et l'élément de chauffage conforme au préambule de la première revendication.

FR2783465 montre un dispositif de chauffage, ventilation et/ou de climatisation dont les différents éléments constitutifs sont agencés dans un carter selon une disposition sensiblement horizontale.

Les dispositifs de ce type comprennent des moyens pour produire un flux d'air pulsé à température ajustée, ainsi que des sorties de dégivrage, d'aération et de chauffage-pied qui sont alimentées parce flux d'air à température ajustée et qui sont propres à être reliées à des buses débouchant dans l'habitacle.

Ces dispositifs connus comprennent essentiellement une unité de ventilation, encore appelée pulseur, qui est alimentée à partir d'air extérieur prélevé hors de l'habitacle et/ou d'air recirculé prélevé à l'intérieur de l'habitacle pour fournir un flux d'air pulsé. Ce flux d'air pulsé est ensuite traité par un ou plusieurs échangeurs de chaleur pour produire un flux d'air à température ajustée. Ces échangeurs comprennent habituellement un évaporateur relié à un circuit de climatisation et un radiateur de chauffage traversé par un fluide caloporteur, habituellement le liquide servant au refroidissement du moteur du véhicule. Il est connu aussi de prévoir, le cas échéant, un radiateur électrique additionnel. Le flux d'air ainsi traité est ensuite envoyé, grâce à des moyens de distribution, vers différentes sorties, à savoir des sorties de dégivrage/désembuage qui débouchent à la base du pare-brise, des sorties d'aération qui débouchent essentiellement au niveau de la planche du bord du véhicule et des sorties de chauffage/pied qui débouchent vers la partie inférieure de l'habitacle.

La plupart des dispositifs connus comprennent un bloc thermique qui contient les échangeurs de chaleur, une chambre de mixage pour assurer le mélange d'un flux d'air frais et d'un flux d'air chaud en proportion réglable pour obtenir un flux d'air à température ajustée, et des moyens de distribution pour répartir ce flux d'air entre les différentes sorties débouchant dans l'habitacle.

Ces dispositifs connus sont généralement disposés en position centrale dans l'habitacle en occupant au moins en partie la console qui se situe entre le plancher et la planche de bord. L'unité de ventilation peut être placée soit dans une position centrale, soit dans une position latérale. Ces dispositifs connus sontadaptés aux conceptions actuelles de véhicules car ces derniers comportent une console, comme déjà indiqué, qui permet de loger en grande partie les composants du dispositif.

Or les conceptions des véhicules évoluent et la tendance s'oriente actuellement vers des véhicules qui ne comportent pas de console. Dans ces conditions, il n'est plus question de concevoir des dispositifs qui sont essentiellement implantés dans une position centrale de l'habitacle et qui présentent un encombrement important en hauteur.

L'invention a notamment pour but de surmonter les inconvénients précités.

C'est en conséquence un but de l'invention de proposer un dispositif de chauffage-ventilation et/ou climatisation de l'habitacle d'un véhicule automobile qui est susceptible de s'intégrer dans des véhicules de conception actuelle, qui sont essentiellement dépourvus de console.

C'est encore un but de l'invention de proposer un tel dispositif qui procure un encombrement réduit, tout en ayant des performances satisfaisantes.

L'invention propose à cet effet un dispositif du type défini en introduction, lequel se compose de modules groupés sensiblement dans un même niveau horizontal et comprenant :
- au moins un module de ventilation agencé pour produire un flux d'air pulsé ;
- un module thermique agencé pour être implanté dans une région centrale de l'habitacle etcomportant une entrée d'air pour l'air pulsé, des échangeurs thermiques propres à être traversés par le flux d'air et au moins une sortie d'air latérale ; et
- au moins un module de distribution ayant une entrée reliée à une sortie d'air latérale du module thermique et comportant des moyens de distribution pour répartir le flux d'air entre des sorties d'air débouchant en des régions choisies de l'habitacle.

Ainsi, le dispositif de l'invention est susceptible de s'adapter dans un volume réduit qui s'étend essentiellement dans un niveau horizontal.

Le dispositif se compose, à cet effet, de plusieurs modules groupés sensiblement dans un même niveau horizontal, et il est donc capable de s'adapter à des véhicules dépourvus de console centrale.

Le module thermique qui inclut notamment les échangeurs thermiques est implanté dans une région centrale de l'habitacle, mais au-dessus de l'emplacement occupé traditionnellement par la console. Il est alimenté parau moins un module de ventilation qui est situé au même niveau. Il alimente à son tour au moins un module de distribution situé sensiblement au même niveau horizontal, et disposé à côté du module thermique. Ce ou ces modules de distribution comportent des moyens de distribution pour répartir le flux d'air entre différentes sorties.

Le module thermique comporte deux sorties d'air latérales débouchant respectivement du côté droit et du côté gauche, et le dispositif comprend deux modules de distribution agencés pour être implantés respectivement du côté droit et du côté gauche du module thermique, chacun ayant une entrée reliée à une sortie d'air latérale du module thermique.

Cette conception en plusieurs modules, regroupés dans un même niveau horizontal, procure un dispositif qui s'implante essentiellement dans la direction transversale (axe Y) du véhicule. Le module de ventilation est disposé à côté du module thermique, soit dans la direction transversale (axe Y) du véhicule, soit dans la direction longitudinale (axe X) du véhicule.

Le module de ventilation comprend avantageusement un bloc d'entrée d'air pour de l'air extérieur et/ou de l'air recirculé, une turbine pour produire un flux d'air pulsé, et une canalisation de sortie pour amener le flux d'air pulsé à l'entrée du module thermique.

Dans une forme préférée de réalisation de l'invention, l'entrée du module thermique est située en partie inférieure, ce module thermique logeant successivement, de bas en haut, un évaporateur de climatisation et au moins un radiateur de chauffage.

De préférence, le module thermique loge un premier radiateur de chauffage traversé par un fluide caloporteur chaud et disposé au-dessus de l'évaporateur, ainsi qu'un deuxième radiateur de chauffage du type électrique disposé au-dessus du premier radiateur de chauffage.

L'évaporateur et le radiateur de chauffage peuvent s'étendre chacun dans un plan incliné entre 0° et 90° par rapport à l'horizontale. De préférence, l'évaporateur s'étend dans un plan incliné entre 20° et 40° par rapport à l'horizontale. Toutefois, d'autres orientations sont envisageables.

Dans une première forme générale de réalisation de l'invention, le dispositif comprend des moyens de réglage pour produire un flux d'air à température ajustée résultant d'un mixage en proportion variable d'un flux d'air chaud ayant traversé le radiateur de chauffage et d'un flux d'airfroid ayant contourné le radiateur de chauffage. On procure ainsi un réglage appelé "mixage sur l'air".

Il est avantageux alors que ces moyens de chauffage comprennent à chaque fois, du côté droit et du côté gauche, un canal latéral d'air chaud traversant une partie du radiateur de chauffage et un canal latéral d'airfroid en dérivation du canal latéral d'air chaud, ainsi qu'un volet latéral de mixage pour répartir en proportion variable le flux d'air chaud dans le canal latéral d'air chaud et le flux d'air froid dans le canal latéral d'airfroid, le canal latéral d'air chaud et le canal d'air froid formant conjointement une sortie latérale du module thermique.

Autrement dit, on réalise alors, respectivement du côté droit et du côté gauche, un mixage d'air pour produire un flux d'air à température ajustée qui est envoyé dans une sortie latérale du module thermique.

Dans cette forme de réalisation, chaque volet latéral de mixage peut être implanté soit dans le module thermique, soit encore dans un module de distribution situé du côté droit ou du côté gauche par rapport au module thermique.

Dans cette première forme générale de réalisation de l'invention, il est avantageux que les moyens de réglage comprennent en outre un canal central pour de l'air chaud ayant traversé une partie du radiateur de chauffage et un canal central pour de l'air froid en dérivation du canal central d'air chaud, ainsi qu'un volet central de mixage pour répartir en proportion variable le flux d'air allant dans le canal central d'air chaud et le flux d'air allant dans le canal central d'air froid, les deux canaux centraux formant conjointement une sortie centrale du module thermique qui est agencée pour alimenter au moins un autre module de distribution pour distribuer un flux d'air à température ajustée vers l'arrière de l'habitacle.

En ce cas, le module central de mixage peut être implanté soit dans le module thermique, soit dans l'autre module de distribution.

Il est avantageux que les moyens de réglage comprennent en outre un volet de répartition déplaçable entre une première position pour envoyer le flux d'air à température ajustée vers la (les) sortie(s) latérale(s) du module thermique alimentant l'avant de l'habitacle, et une deuxième position pour envoyer le flux d'air à température ajustée vers la sortie centrale du module thermique alimentant l'arrière de l'habitacle.

Dans une deuxième forme générale de réalisation de l'invention, le dispositif comprend des moyens de réglage agissant sur le débit, et donc la température, d'un fluide caloporteur traversant le radiateur de chauffage pour produire un flux d'air à température ajustée. On procure alors un réglage appelé "mixage sur l'eau".

Dans cette deuxième forme de réalisation de l'invention, le dispositif comprend avantageusement deux chambres latérales de sortie situées en aval du radiateur de chauffage et aboutissant respectivement aux sorties latérales du module thermique.

Il peut comprendre en outre au moins une canalisation latérale d'air froid pour amener directement un flux d'air froid prélevé dans le module thermique en amont du radiateur de chauffage vers un module de distribution implanté du côté droit ou du côté gauche.

Il est avantageux de prévoiren outre une chambre centrale de sortie située en aval du radiateur de chauffage et aboutissant à une sortie centrale du groupe thermique, et agencée pour alimenter au moins un autre module de distribution pour distribuer un flux d'air à température ajustée vers l'arrière de l'habitacle.

On peut prévoir en outre au moins une canalisation centrale d'air froid pour amener directement un flux d'air froid prélevé dans le groupe thermique, en amont du radiateur de chauffage, vers l'autre module de distribution ou vers un compartiment à refroidir.

Dans une forme de réalisation préférée, le(s) module(s) de distribution a (ont) chacun une sortie basse débouchant vers le bas de l'habitacle, une sortie haute débouchant vers la base du pare-brise et une sortie intermédiaire débouchant au niveau de la planche de bord.

De manière particulièrement avantageuse, les modules qui constituent le dispositif de l'invention sont intégrés dans une poutre transversale du véhicule.

Dans la description qui suit, faite seulement à titre d'exemples, on se réfère aux dessins annexés, sur lesquels :
- la figure 1 est une vue schématique de face d'un dispositif de structure modulaire selon une première forme de réalisation de l'invention ;
- la figure 2 montre le module thermique du dispositif de la figure 1 ;
- la figure 3 est une vue en perspective avec arrachement du dispositif de la figure 1 ;
- la figure 4 est une vue en coupe verticale du module thermique du dispositif des figures 1 et 3 ;
- la figure 5 est une vue en coupe selon la ligne V-V de la figure 4 ;
- la figure 6 montre schématiquement la circulation de l'air dans la partie supérieure du module thermique de la figure 4 ;
- la figure 7 est une vue en perspective montrant deux satellites de distribution faisant partie des modules de distribution ;
- la figure 8 est une vue en perspective d'un dispositif selon une autre forme de réalisation de l'invention ;
- la figure 9 est une vue en pérspective d'un module de distribution ;
- la figure 10 est une vue en perspective montrant des buses de distribution propres à s'adapter sur le module de distribution de la figure 9 ;
- la figure 11 est une vue schématique en coupe horizontale d'un autre dispositif selon l'invention, dans lequel le flux d'air à température ajustée est obtenu par régulation de la température du fluide caloporteur qui traverse le radiateur de chauffage ;
- la figure 12, est une vue en coupe selon la ligne XII-XII de la figure 11 ;
- la figure 13 est une vue analogue à la figure 11 dans une variante de réalisation ;
- la figure 14 est une vue en coupe verticale d'un module thermique selon une autre forme de réalisation ;
- la figure 15 est une vue en coupe selon la ligne XV-XV de la figure 14 ;
- la figure 16 est une vue en coupe analogue à la figure 4 dans une variante de réalisation ;
- la figure 17 est une vue en coupe selon la ligne XVII-XVII de la figure 16 ;
- la figure 18 est une vue en perspective d'une poutre transversale intégrant un dispositif selon l'invention, des parties formant couvercle des modules de distribution étant enlevées ; et
- la figure 19 est une vue analogue à la figure 18, les parties formant couvercle étant mises en place.

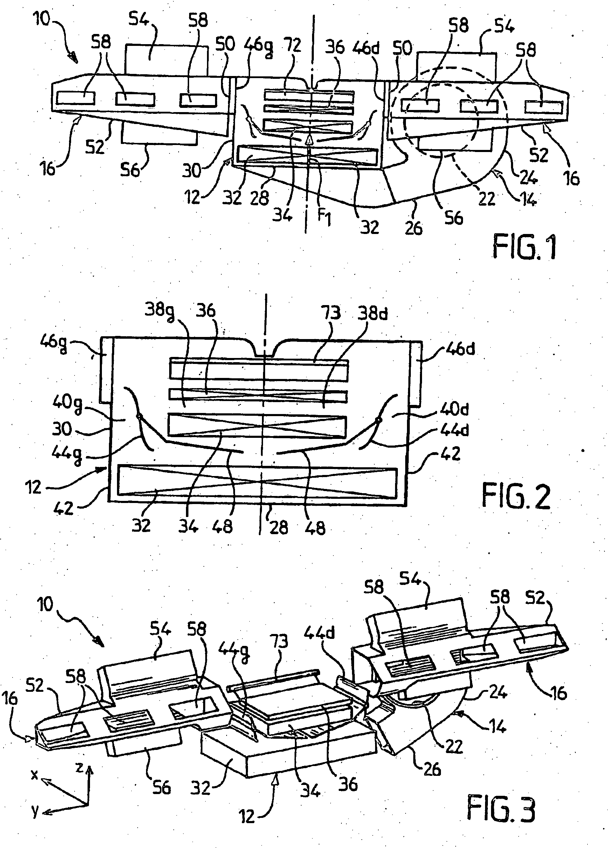

On se réfère d'abord conjointement aux figures 1 et 3 qui représentent un dispositif de chauffage-ventilation et/ou climatisation de l'habitacle d'un véhicule automobile. Le dispositif, désigné dans son ensemble par la référence 10, se compose essentiellement de plusieurs modules groupés sensiblement dans un même niveau horizontal. On a représenté également sur la figure 3 les trois axes habituels d'un véhicule, à savoir l'axe longitudinal (axe X), l'axe transversal (axe Y) et l'axe vertical (axe Z). Le dispositif comprend un module thermique 12 agencé pour être implanté dans une région centrale de l'habitacle, un module de ventilation 14 disposé à côté du module thermique, et deux modules de distribution 16 agencés pour être implantés respectivement du côté droit et du côté gauche du module thermique. Comme on peut le voir sur les figures 1 et 3, le module thermique 12, le module de ventilation 14 et les deux modules de distribution 16 sont implantés sensiblement dans un même niveau horizontal et suivant la direction transversale (axe Y) du véhicule. Le regroupement en plusieurs modules suivant un même niveau horizontal libère ainsi de la place dans la position centrale inférieure et supérieure, ce qui permet d'adapter le dispositif à un véhicule dépourvu de console centrale. De plus, cela fait place à un large espace sur la planche de bord, notamment pour des dispositifs de navigation ou d'autres équipements.

Le module de ventilation 14 est disposé à côté du module thermique 12, dans la direction transversale (axe Y) du véhicule. Il comprend un bloc d'entrée d'air (non représenté sur la figure 1) propre à être alimenté par de l'air extérieur et/ou de l'air recirculé, un filtre (non représenté) pour filtrer le flux d'air et une turbine 22 pour produire un flux d'air pulsé. Cette turbine 22 est logée dans une enveloppe 24, formant volute, se prolongeant par une canalisation de sortie 26 pour amener le flux d'air filtré et pulsé à une entrée 28 du module thermique. Cette entrée 28 est située en partie inférieure du module thermique si bien que l'air est envoyé dans le module thermique dans une direction généralement verticale et ascendante comme montré par la flèche F1 sur la figure 1.

Le module thermique 12 (figures 1 à 3) comprend un boîtier 30 de forme généralement parallélépipédique, l'entrée 28 étant formée dans la face inférieure du boîtier. Le boîtier loge plusieurs échangeurs thermiques pour traiter le flux d'air provenant du module de ventilation. Le boîtier loge successivement, de bas en haut, un évaporateur 32, un radiateur de chauffage 34 traversé par un fluide caloporteur chaud (habituellement le liquide de refroidissement du moteur du véhicule) et un radiateur de chauffage électrique 36.

Dans l'exemple, l'évaporateur 32 et les deux radiateurs 34 et 36 s'étendent dans des plans sensiblement horizontaux. Toutefois, une telle implantation n'a pas un caractère limitatif. L'évaporateur peut être placé dans toute position choisie depuis une position horizontale vers une position verticale. Le radiateur de chauffage 34, qui est placé en aval de l'évaporateur, peut être placé dans toute position choisie depuis une position parallèle à une position perpendiculaire à l'évaporateur. Le radiateur de chauffage électrique 36, qui est facultatif, est placé en aval du radiateur de chauffage 34 de préférence parallèlement ou légèrement incliné par rapport à celui-ci. Le radiateur 36 comprend de préférence des résistances à coefficient de température positif (encore appelées résistances CTP).

Le module thermique 12 comprend en outre des moyens de réglage pour produire un flux d'air à température ajustée par mélange (mixage) en proportion variable d'un flux d'air chaud ayant traversé le ou les radiateurs de chauffage 34 et 36 et d'un flux d'air froid ayant contourné le radiateur de chauffage. Ces moyens de réglage comprennent, du côté droit et du côté gauche du module thermique 12, un canal latéral d'air chaud 38d, respectivement 38g, traversant chacun une moitié des radiateurs de chauffage 34 et 36 et un canal latéral d'air froid 40d, respectivement 40g, en dérivation du canal latéral d'air chaud. Comme on peut le voir plus particulièrement sur la figure 2, les radiateurs 34 et 36 ont une largeur horizontale inférieure à la largeur horizontale de l'évaporateur 32 et inférieure à la largeur du boîtier 30 tels que définis par deux parois latérales 42.

Un volet latéral de mixage 44d, respectivement 44g, est prévu dans le boîtier pour répartir en proportion variable le flux d'air chaud dans le canal latéral d'air chaud et le flux d'air froid dans le canal d'air froid. De chaque côté du module thermique 12, le canal latéral d'air chaud 38d (ou 38g) et le canal latéral d'air froid 40d (ou 40g) forment conjointement une sortie latéral 46d, respectivement 46g du module thermique. Dans l'exemple, chacun des volets latéraux de mixage 44d et 44g est implanté dans le module thermique, celui-ci incorporant ainsi la fonction de mixage. On comprendra que l'airtraverse d'abord l'évaporateur puis se partage en deux flux affectés respectivement à la partie droite et à la partie gauche. Dans chacune des parties ou moitiés, la température du flux d'air est réglée par mélange, en proportion variable, d'un flux d'air froid et d'un flux d'air chaud. On peut ainsi régler, de manière indépendante, la température du flux d'air envoyé dans les deux modules de distribution 16.

Dans l'exemple, les volets de mixage sont illustrés schématiquement. Ils comprennent principalement deux volets de type papillon entre lesquels s'étend un volet à registre 48 qui est disposé entre l'évaporateur 32 et le radiateur de chauffage 34.

Les deux modules de distribution 16 sont implantés respectivement du côté droit et du côté gauche du module thermique. Chacun possède une entrée 50 reliée à une sortie d'air latérale 46d ou 46g du module thermique. Chaque module de distribution 16 est réalisé sous la forme d'un boîtier allongé 52 qui occupe à chaque fois une partie de la planche de bord du véhicule. Ce boîtier allongé 52 délimite une chambre intérieure qui alimente plusieurs sorties d'air : une sortie 54 dirigée vers le haut, une sortie 56 dirigée vers le bas et trois sorties intermédiaires ou sorties frontales 58. La sortie haute 54 est propre à alimenter au moins une buse de dégivrage/désembuage du pare-brise, tandis que la sortie basse 56 est propre à alimenter au moins une buse de chauffage-pieds vers la partie inférieure de l'habitacle. Enfin, les sorties 58 alimentent des aérateurs aménagés essentiellement dans la planche de bord du véhicule. Chacun des modules 16 incorpore des moyens de répartition, qui seront décrits plus loin, pour répartir le flux d'air entre les sorties précitées en fonction des souhaits du ou des occupants du véhicule.

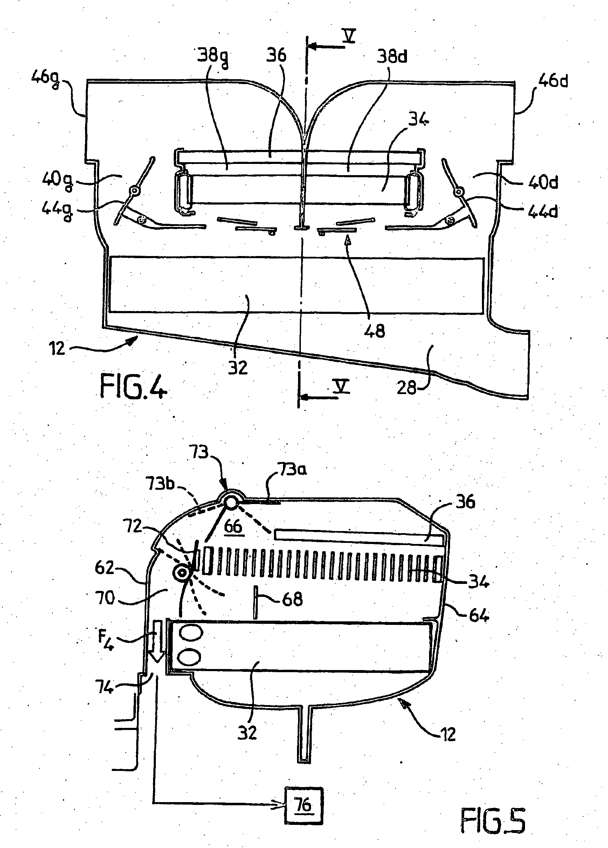

La figure 4 est une vue analogue à la figure 3 illustrant de manière plus détaillée les composants du module thermique 12.

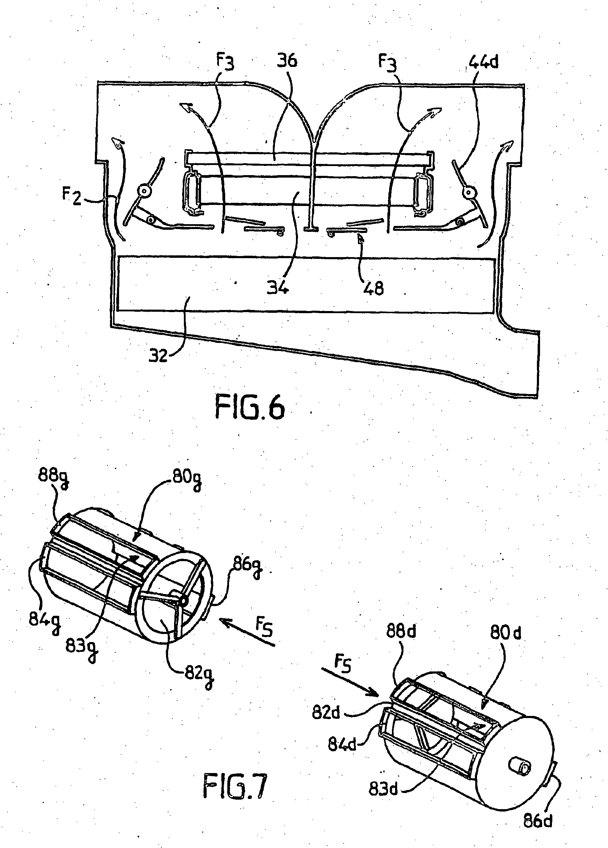

Comme on peut le voir sur la figure 6, la fonction de mixage entre le flux d'air froid F2 et le flux d'air chaud F3 s'effectue de chaque côté du module thermique 12 mais le mixage proprement dit s'effectue dans une chambre de mixage 60 qui se trouve dans chaque module de distribution 16, et plus particulièrement à l'entrée de chacun d'eux. Cependant, dans une variante de réalisation (non représentée), la fonction de mixage pourrait être complètement déportée dans chacun des modules de distribution. En ce cas, les volets de mixage seraient situés complètement dans les modules de distribution.

Sur la coupe transversale de la figure 5, on aperçoit l'évaporateur 32 ainsi que les deux radiateurs 34 et 36. Le boîtier du module thermique 12 est limité par une paroi antérieure 62 située du côté du compartiment moteur du véhicule et par une paroi postérieure 64 située du côté de l'habitacle. Les moyens de réglage comprennent un canal central d'air chaud 66 limité par une cloison 68 pour répartir une partie du flux d'air vers l'arrière du boîtier. En outre, un canal central d'air froid 70 est placé en dérivation du canal central d'air chaud.

Un volet central de mixage 72 est placé dans le boîtier pour permettre de faire varier, en proportion réglable, le flux d'air froid et le flux d'air chaud et procurer un flux d'air à température ajustée qui est envoyé dans un canal comme montré par la flèche F4. Ceci permet d'alimenter une sortie 74 du module thermique. Celle-ci alimente à son tour au moins un autre module de distribution 76 (représenté schématiquement) pour distribuer un flux d'air à température ajustée vers l'arrière de l'habitacle. Là aussi, la fonction de mixage, pour cet autre module de distribution, pourrait être déportée dans celui-ci.

Le dispositif de la figure 5 comprend en outre un volet de répartition 73 déplaçable entre une première position 73a (représentée en trait plein) pour envoyer le flux d'air à température ajustée vers les sorties latérales du module thermique qui alimentent l'avant de l'habitacle et une deuxième position 73b (représentée en trait interrompu) pour envoyer le flux d'air à température ajustée vers la sortie centrale 74 alimentant l'arrière de l'habitacle. Cela permet de privilégier les fonctions de chauffage-ventilation ou climatisation, de manière sélective, soit vers l'avant soit vers l'arrière de l'habitacle.

Le (s) module(s) de distribution arrière distribue (nt) de l'air vers des bouches de distribution placées à l'arrière du véhicule pour envoyer de l'air au travers d'aérateurs, de bouches de distribution inférieures et vers les vitres latérales du véhicule.

On se réfère maintenant à la figure 7 qui montre un exemple de moyens de distribution logés à l'intérieur des modules de distribution 16. Chacun des modules de distribution 16 comprend un boîtier cylindrique 80d, respectivement 80g, comportant une entrée axiale 82d, respectivement 82g, pour le flux d'air à distribuer. A l'intérieur de chaque boîtier est logé un volet cylindrique 83d, respectivement 83g, dont la position angulaire permet d'ouvrir ou de fermer sélectivement trois sorties. Ces sorties comprennent une sortie 84d, respectivement 84g, vers des aérateurs, une sortie 86d, respectivement 86g, vers les pieds et une sortie 88d, respectivement 88g, vers la base du pare-brise pour son dégivrage/désembuage. Les moyens de distribution de la figure 7 peuvent être intégrés à un dispositif du type de celui représenté aux figures 1 et 3.

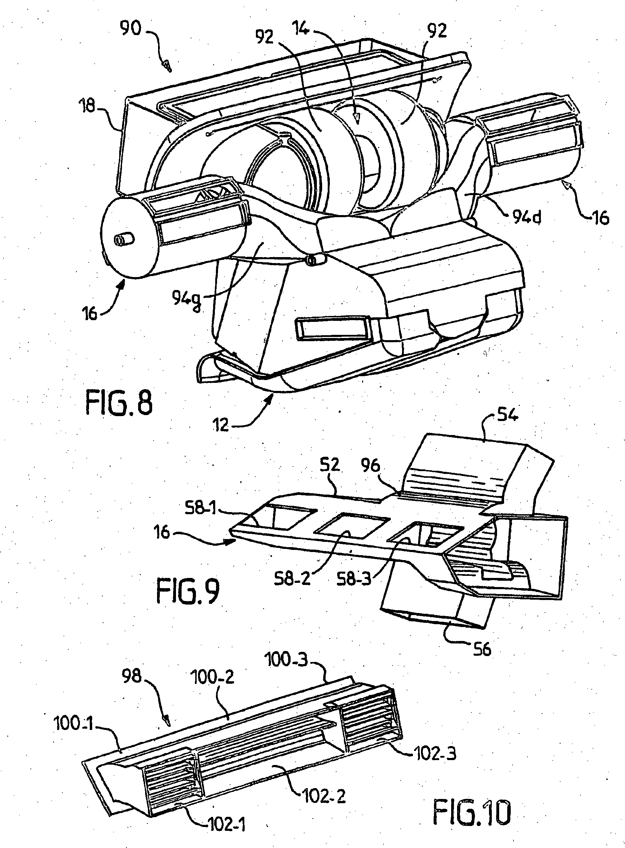

Cependant, ils trouvent avantageusement une intégration dans un dispositif 90, selon une autre forme de réalisation de l'invention, comme montré à la figure 8. Ce dispositif 90 s'apparente au dispositif 10 des figures 1 à 3. Il comporte aussi un module thermique 12 placé en position centrale et deux modules de distribution 16 implantés respectivement du côté droit et du côté gauche et constitués comme définis précédemment en référence à la figure 7. Cependant, à la différence du premier mode de réalisation décrit, le module de ventilation 14 occupe ici une position centrale. Il est disposé également à côté du module thermique 12, mais dans la direction longitudinale (axe X) du véhicule. Il comporte une doubleturbine 92 dont l'axe de rotation est transversal. Le module de ventilation 14 peut être placé soit dans le compartiment moteur, soit dans l'habitacle, soit entre les deux.

On aperçoit également sur la figure 8 le bloc d'entrée d'air 18 qui alimente les turbines et qui est placé habituellement sous une grille (non représentée), appelée "séparateur d'eau" placée à l'avant du pied du pare-brise. Les sorties latérales du module thermique sont reliées aux modules de distribution 16 par deux conduits d'air respectivement 94d et 94g.

Le module de distribution 16 de la figure 9 est similaire à ceux représentés sur la figure 3. Il comprend un boîtier allongé 52 alimenté en air et comportant une partie cylindrique 96 logeant un volet cylindrique (non représenté) analogue à celui des figures 7 et 8. Le volet permet de contrôler la répartition de l'air entre une sortie haute 54 alimentant des buses de dégivrage/désembuage du pare-brise, une sortie basse 56 dirigée vers le bas de l'habitacle et trois sorties frontales 58-1, 58-2 et 58-3. Les sorties frontales sont logées dans la planche de bord. Le volet précité n'est pas en mesure de contrôler les sorties 58-1 à 58-3. Cette fonction est assurée par un diffuseur 98 représenté sur la figure 10 qui comprend trois entrées 100-1, 100-2 et 100-3 qui forment interface respectivement avec les sorties 58-1 à 58-3. Chacun de ces diffuseurs comprend ses propres moyens de réglage. Le diffuseur 98 comporte des buse de sortie 102-1, 102-2 et 102-3 et il est monté sur le boîtier 52 du module de distribution 16.

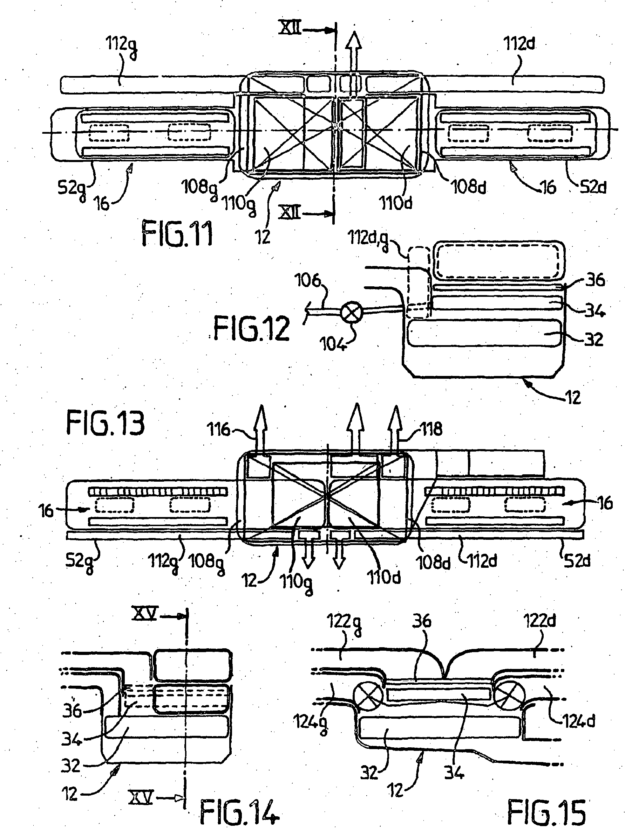

On se réfère maintenant aux figures 11 et 12 qui représentent schématiquement une autre forme de réalisation de l'invention, dans laquelle le réglage de la température est obtenu en faisant varier le débit du fluide caloporteur qui traverse le radiateur 34. Ceci est obtenu en ajustant la position d'au moins un robinet de réglage 104 monté sur une canalisation 106 qui alimente le radiateur 34 en fluide caloporteur (figure 12). Le dispositif comprend deux chambres latérales desortie 108 qui sont placées en aval des radiateurs 34 et 36 et qui alimentent respectivement les boîtiers 52g et 52d des deux modules de distribution. Le module thermique 12 est divisé en deux zones de chauffage 110d et 110g affectées respectivement aux modules de distribution. Dans un dispositif de ce type, les différentes sorties des deux modules de distribution sont alimentées par un air à la même température. Pour éviter cet inconvénient, on prévoit en outre au moins une canalisation latérale d'air froid 112d, 112g pour amener directement un flux d'air froid prélevé dans le module thermique 12, en amont d'air du radiateur de chauffage 34, vers un module de distribution 16 implanté du côté droit ou du côté gauche. Ceci permet d'alimenter les sorties d'air intermédiaires et/ou les sorties d'air hautes par de l'air froid pour créer une stratification de température.

Dans la variante de réalisation de la figure 13, le réglage de la température est obtenu par mixage du flux d'air froid et du flux d'air chaud ayant traversé le radiateur 34 obtenu en ajustant la position d'au moins un volet de réglage 44d, 44g et 48. Pour le reste, les autres éléments du dispositif sont analogues à ceux définis précédemment en référence aux figures 11 et 12.

Dans cet exemple de réalisation, les dimensions des deux canalisations latérales d'air froid 112d et 112g ont été réduites par rapport à la forme de réalisation des figures 11 et 12.

Ceci permet de dégager de la place pour deux autres canalisations d'air froid 116 et 118 qui peuvent être dédiées à d'autres fonctions, par exemple au refroidissement de composants électriques ou encore à la réfrigération d'un compartiment à bouteille ou de la boîte à gants du véhicule.

Dans la forme de réalisation des figures 11 et 12, on prévoit aussi une chambre centrale de sortie située en aval du radiateur de chauffage et aboutissant à une sortie centrale du groupe thermique, et agencée pour alimenter au moins un autre module de distribution vers l'arrière de l'habitacle. Il peut aussi être prévu une canalisation centrale d'air froid pour amener directement un flux d'air froid prélevé dans le groupe thermique, en amont du radiateur de chauffage, vers cet autre module de distribution placé à l'arrière du véhicule.

Dans la forme de réalisation des figures 14 et 15, chaque module de distribution 16 comprend un boîtier 52d, respectivement 52g, analogue à ceux de la figure 13. Toutefois, chacun des boîtiers est divisé en un conduit d'air chaud 122d, respectivement 122g, et en un conduit d'air froid 124d, respectivement 124g. Les deux conduits d'air chaud sont reliés à la sortie des radiateurs de chauffage 34 et 36, tandis que les conduits d'air froid sont reliés à la sortie de l'évaporateur 32. Le mélange entre l'air chaud et l'air froid s'effectue alors directement dans chacun des modules de distribution 16 par des volets appropriés (non représentés).

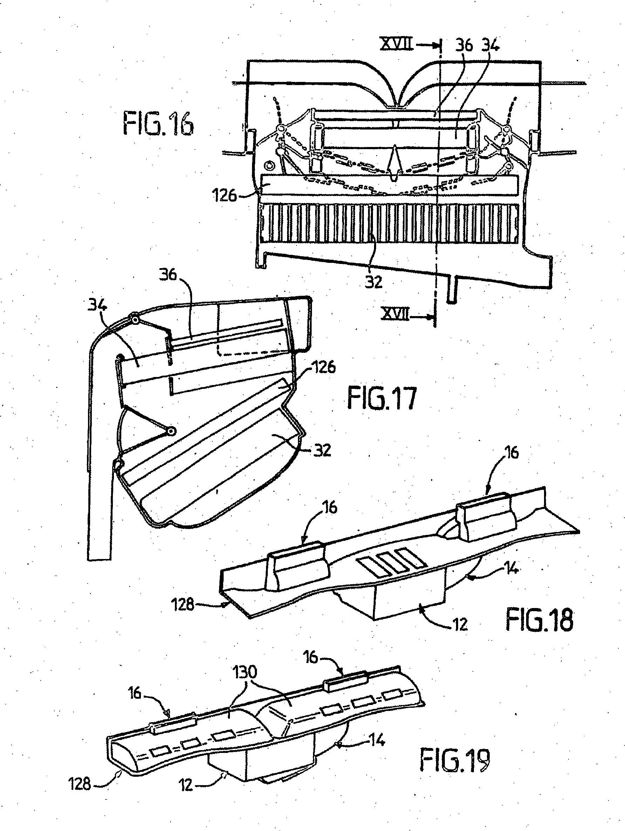

On se réfère maintenant aux figures 16 et 17. Dans cette forme de réalisation, un module de photocatalyse 126 est implanté en aval de l'évaporateur pour traiter les odeurs générées par celui-ci. Ce module 126 est placé au-dessus de l'évaporateur 32. L'implantation horizontale, ou quasi horizontale, de l'évaporateur facilite l'intégration de ce module de photocatalyse 126 entre l'évaporateur 32 et le radiateur de chauffage 34. Dans l'exemple illustré, l'évaporateur 32 et le module de photocatalyse 126 sont tous deux inclinés en formant chacun un angle compris entre 20° et 40° par rapport à l'horizontale (figure 17).

Dans la plupart des formes de réalisation précitées, chacun des modules de distribution est alimenté par un conduit d'air unique, ce qui a pour résultat que les sorties d'air sont à la même température. Pour éviter cet inconvénient, il est possible, comme montré précédemment, d'ajouter des canalisations d'air froid pour créer une stratification de température à deux ou à trois niveaux. Il est possible aussi de créer une stratification fixe en divisant chaque conduit d'air en un conduit d'air chaud et un conduit d'air froid.

Une autre solution consiste à transférer des sources thermiques à l'intérieur de chacun des modules de distribution 16, ou directement dans les conduits alimentant les sorties basses (sorties pieds) ou les sorties hautes (sorties dégivrage/désembuage) pour réchauffer ces sorties à une température supérieure à celle des sorties d'aération.

On se réfère maintenant à la figure 18 qui montre l'intégration du module thermique 12, du module de ventilation 14 et des deux modules de distribution 16 dans une poutre transversale 128 du véhicule. La poutre transversale 128 peut constituer directement une partie au moins des modules de distribution 16. Ces derniers comprennent chacun un couvercle 130 qui est rapporté ensuite sur la poutre 128 (figure 19) pour fermer les conduits d'air respectifs des deux modules 16.

La conception modulaire du dispositif de l'invention, avec des modules situés sensiblement sur un même niveau horizontal, facilite son intégration dans un véhicule automobile dépourvu de console.

## Revendications

1. Dispositif de chauffage-ventilation et/ou climatisation de l'habitacle d'un véhicule automobile, comprenant des moyens pour produire un flux d'air pulsé à température ajustée, ainsi que des sorties de dégivrage, d'aération et de chauffage-pied alimentées par ce flux d'air ajusté et propre à être relié à des buses débouchant dans l'habitacle, et composé de modules groupés sensiblement dans un même niveau horizontal et comprenant :
- au moins un module de ventilation (14) agencé pour produire un flux d'air pulsé ;
- au moins un module thermique (12) agencé pour être implanté dans une région centrale de l'habitacle et comportant une entrée d'air (28) pour l'air pulsé, des échangeurs thermiques (32, 34, 36) propres à être traversés par le flux d'air et au moins une sortie d'air latérale (46d, 46g) ; et
- au moins un module de distribution (16) ayant une entrée (50) reliée à une sortie d'air latérale (46d, 46g) du module thermique et comportant des moyens de distribution pour répartir le flux d'air entre des sorties d'air (54, 56, 58) débouchant en des régions choisies de l'habitacle,
**caractérisé en ce que** le module thermique (12) comporte deux sorties d'air latérales (46d, 46g) débouchant respectivement du côté droit et du côté gauche, et **en ce que** le dispositif comprend deux modules de distribution (16) agencés pour être implantés respectivement du côté droit et du côté gauche du modules thermique, chacun ayant une entrée (50) reliée à une sortie d'air latérale (46d, 46g) du module thermique.

2. Dispositif selon la revendication 1, **caractérisé en ce que** le module de ventilation (14) est disposé à côté du module thermique (12) dans la direction transversale (axe Y) du véhicule.

3. Dispositif selon la revendication 1, **caractérisé en ce que** le module de ventilation (14) est disposé à côté du module thermique (12) dans la direction longitudinale (axe X) du véhicule.

4. Dispositif selon l'une des revendications 1 à 3, **caractérisé en ce que** le module de ventilation (14) comprend un bloc d'entrée d'air (18) pour de l'air extérieur et/ou de l'air recirculé, une turbine (22) pour produire un flux d'air pulsé, et une canalisation de sortie (26) pour amener le flux d'air pulsé à l'entrée (28) du module thermique.

5. Dispositif selon l'une des revendications 1 à 4, **caractérisé en ce que** l'entrée (28) du module thermique (12) est située en partie inférieure de celui-ci, et **en ce que** le module thermique (12) loge successivement, de bas en haut, un évaporateur (32) de climatisation et au moins un radiateur de chauffage (34, 36).

6. Dispositif selon la revendication 5, **caractérisé en ce que** le module thermique (12) loge un premier radiateur de chauffage (34) traversé par un fluide caloporteur chaud et disposé au dessus dé l'évaporateur (12), ainsi qu'un deuxième radiateur de chauffage (36) du type électrique, disposé au-dessus du premier radiateur de chauffage (34).

7. Dispositif selon l'une des revendications 5 et 6, **caractérisé en ce que** l'évaporateur (32) et le radiateur de chauffage (34) s'étendent chacun dans un plan incliné entre 0° et 90° par rapport à l'horizontale.

8. Dispositif selon la revendication 7, **caractérisé en ce que** l'évaporateur (32) s'étend dans un plan incliné entre 20° et 40° par rapport à l'horizontale.

9. Dispositif selon l'une des revendications 1 à 8, **caractérisé en ce qu'**il comprend des moyens de réglage (44d, 44g, 48) pour produire un flux d'air à température ajustée résultant d'un mixage, en proportion variable, d'un flux d'air chaud ayant traversé le radiateur de chauffage (34, 36) et d'un flux d'air froid ayant contourné le radiateur de chauffage (34, 36).

10. Dispositif selon la revendication 9, **caractérisé en ce que** les moyens de réglage comprennent à chaque fois, du côté droit et du côté gauche, un canal latéral d'air chaud (38d, 38g) traversant une partie du radiateur de chauffage (34, 36) et un canal latéral d'air froid (40d, 40g) en dérivation du canal latéral d'air chaud, ainsi qu'un volet latéral de mixage (44d, 44g) pour répartir en proportion variable le flux d'air chaud dans le canal latéral d'air chaud et le flux d'air froid dans le canal latéral d'air froid, le canal latéral d'air chaud (38d, 38g) et le canal latéral d'air froid (40d, 40g) formant conjointement une sortie latérale (46d, 46g) du module thermique.

11. Dispositif selon la revendication 10, **caractérisé en ce que** chaque volet latéral de mixage (44d, 44g) est imptanté dans le module thermique (12).

12. Dispositif selon la revendication 10, **caractérisé en ce que** chaque volet latéral de mixage est implanté dans un module de distribution (16) situé du côté droit ou du côté gauche par rapport au module thermique (12).

13. Dispositif selon la revendication 8, **caractérisé en ce que** les moyens de réglage comprennent en outre un canal central d'air (66) pour de l'air chaud ayant traversé une partie du radiateur de chauffage (34, 36) et un canal central d'air (70) pour de l'air froid en dérivation du canal central d'air (66), ainsi qu'un volet central de mixage (72) pour répartir en proportion variable le flux d'air allant vers le canal central d'air chaud (66) et le flux d'air dans le canal central d'air froid (70), les deux canaux centraux (66, 70) formant conjointement une sortie centrale (74) du module thermique (12) agencée pour alimenter au moins un autre module de distribution (76) pour distribuer un flux d'air à température ajustée vers l'arrière de l'habitacle.

14. Dispositif selon la revendication 13, **caractérisé en ce que** le volet central de mixage (72) est implanté dans le module thermique (12).

15. Dispositif selon la revendication 13, **caractérisé en ce que** le volet central de mixage (72) est implanté dans l'autre module de distribution (76).

16. Dispositif selon l'une des revendications 13 à 15, **caractérisé en ce que** les moyens de réglage comprennent en outre un volet de répartition (73) déplaçable entre une première position (73a) pour envoyer le flux d'air à température ajustée vers la (les) sortie(s) latérale(s) (46d, 46g) du module thermique (12) alimentant l'avant de l'habitacle, et une deuxième position (73b) pour envoyer le flux d'air à température ajustée vers la sortie centrale (74) du module thermique (12) alimentant l'arrière de l'habitacle.

17. Dispositif selon l'une des revendications 1 à 16, **caractérisé en ce qu'**il comprend deux chambres latérales de sortie (108d, 108g) situées en aval du radiateur de chauffage (34, 36) et aboutissant respectivement aux sorties latérales (46d, 46g) du module thermique.

18. Dispositif selon la revendication 17; **caractérisé en ce qu'**il comprend en outre au moins une canalisation latérale d'air froid (112d, 112g) pour amener directement un flux d'air froid prélevé dans le module thermique (12), en amont du radiateur de chauffage (34), vers un module de distribution (16) implanté du côté droit ou du côté gauche.

19. Dispositif selon la revendication 17, **caractérisé en ce qu'**il comprend en outre une chambre centrale de sortie située en aval du radiateur de chauffage (34, 36) et aboutissant à une sortie centrale du groupe thermique (12), et agencée pour alimenter au moins un autre module de distribution (76) pour distribuer un flux d'air à température ajustée vers l'arrière de l'habitacle.

20. Dispositif selon la revendication 17, **caractérisé en ce qu'**il comprend en outre au moins une canalisation centrale d'air froid pour amener directement un flux d'air froid prélevé dans le module thermique (12), en amont du radiateur de chauffage (34), vers l'autre module de distribution (76) ou vers un compartiment à refroidir.

21. Dispositif selon l'une des revendications 1 à 17, **caractérisé en ce que** le(s) module(s) de distribution (16) a (ont) chacun une sortie basse (56) débouchant vers les pieds, une sortie haute (54) débouchant vers le pare-brise et au moins une sortie intermédiaire (58) débouchant frontalement.

22. Dispositif selon l'une des revendications 1 à 8, caractérisé en de qu'il comprend des moyens de réglage (104) agissant sur le débit, et donc la température, d'un fluide caloporteur traversant le radiateur de chauffage (34) pur produire un flux d'air à température ajustée.

23. Dispositif selon la revendication 22, **caractérisé en ce qu'**il comprend deux chambres latérales de sortie (108d, 108g) situées en aval du radiateur de chauffage (34, 36) et aboutissant respectivement aux sorties latérales (46d, 46g) du module thermique.

24. Dispositif selon la revendication 23, **caractérisé en ce qu'**il comprend en outre au moins une canalisation latérale d'air froid (112d, 112g) pour amener directement un flux d'air froid prélevé dans le module thermique (12), en amont du radiateur de chauffage (34), vers un module de distribution (16) implanté du côté droit où du côté gauche.

25. Dispositif selon la revendication 23, **caractérisé en ce qu'**il comprend en outre une chambre centrale de sortie située en aval du radiateur de chauffage (34, 36) et aboutissant à une sortie centrale du groupe thermique (12), et agencée pour alimenter au moins un autre module de distribution (76) pour distribuer un flux d'air à température ajustée vers l'arrière de l'habitacle.

26. Dispositif selon la revendication 23, **caractérisé en ce qu'**il comprend en outre au moins une canalisation centrale d'air froid pour amener directement un flux d'air froid prélevé dans le module thermique (12), en amont du radiateur de chauffage (34), vers l'autre module de distribution (76) ou vers un compartiment à refroidir.

27. Dispositif selon l'une des revendications 1 à 23, **caractérisé en ce que** le(s) module(s) de distributibn (16) a (ont) chacun une sortie basse (56) débouchant vers les pieds, une sortie haute (54) débouchant vers le pare-brise et au moins une sortie intermédiaire (58) débouchant frontalement.

28. Dispositif selon l'une des revendications 1 à 27, **caractérisé en ce que** les modules (12, 14, 16) qui le constituent sont intégrés dans une poutre transversale (128) du véhicule.

## Patentansprüche

1. Heiz-, Lüftungs- und/oder Klimaanlage für das Karosseriegehäuse eines Kraftfahrzeugs, umfassend Mittel, um einen pulsierenden Luftstrom mit eingestellter Temperatur zu erzeugen, sowie Ausgänge zur Enteisung, Belüftung und Fußbeheizung, die von diesem eingestellten Luftstrom versorgt werden, die mit in das Karosseriegehäuse mündenden Düsen verbunden werden kann, und sich aus Modulen zusammensetzt, die im Wesentlichen auf einer selben Horizontalebene gruppiert sind und umfassen:
- mindestens ein Belüftungsmodul (14), das derart vorgesehen ist, dass es einen pulsierenden Luftstrom erzeugt;
- mindestens ein Wärmemodul (12), das derart vorgesehen ist, dass es in einem zentralen Bereich des Karosseriegehäuses eingebaut wird und einen Lufteintritt (28) für die pulsierende Luft, Wärmetauscher (32, 34, 36), durch die der Luftstrom strömen kann, und mindestens einen seitlichen Luftaustritt (46d, 46g) umfasst; und
- mindestens ein Verteilungsmodul (16), das einen Eingang (50) aufweist, der mit einem seitlichen Luftaustritt (46d, 46g) des Wärmemoduls verbunden ist, und das Verteilungsmittel umfasst, um den Luftstrom zwischen Luftaustritten (54, 56, 58), die in ausgewählten Bereichen des Karosseriegehäuses münden, zu verteilen, **dadurch gekennzeichnet, dass** das Wärmemodul (12) zwei seitliche Luftaustritte (46d, 46g) umfasst, die auf der rechten bzw. linken Seite münden, und dass die Vorrichtung zwei Verteilungsmodule (16) umfasst, die derart vorgesehen sind, dass sie auf der rechten bzw. linken Seite des Wärmemoduls eingebaut werden können, wobei jedes einen Eingang (50) aufweist, der mit einem seitlichen Luftaustritt (46d, 46g) des Wärmemoduls verbunden ist.

2. Vorrichtung nach Anspruch 1, **dadurch gekennzeichnet, dass** das Belüftungsmodul (14) neben dem Wärmemodul (12) in Querrichtung (Y-Achse) des Fahrzeugs angeordnet ist.

3. Vorrichtung nach Anspruch 1, **dadurch gekennzeichnet, dass** das Belüftungsmodul (14) neben dem Wärmemodul (12) in Längsrichtung (X-Achse) des Fahrzeugs angeordnet ist.

4. Vorrichtung nach einem der Ansprüche 1 bis 3, **dadurch gekennzeichnet, dass** das Belüftungsmodul (14) einen Lufteintrittsblock (18) für Außenluft und/oder umgewälzte Luft, eine Turbine (22) zur Erzeugung eines pulsierenden Luftstroms und einen Ausgangskanal (26), um den pulsierenden Luftstrom zum Eingang (28) des Wärmemoduls zu leiten, umfasst.

5. Vorrichtung nach einem der Ansprüche 1 bis 4, **dadurch gekennzeichnet, dass** sich der Eingang (28) des Wärmemoduls (12) im unteren Teil desselben befindet, und dass dieses Wärmemodul (12) nacheinander von unten nach oben einen Klimaverdampfer (32) und mindestens einen Heizkörper (34, 36) aufweist.

6. Vorrichtung nach Anspruch 5, **dadurch gekennzeichnet, dass** das Wärmemodul (12) einen ersten Heizkörper (34), durch den ein warmes flüssiges Kühlmittel strömt und der über dem Verdampfer (32) angeordnet ist, sowie einen zweiten Heizkörper (36) elektrischen Typs, der über dem ersten Heizkörper (34) angeordnet ist, umfasst.

7. Vorrichtung nach einem der Ansprüche 5 und 6, **dadurch gekennzeichnet, dass** sich der Verdampfer (32) und der Heizkörper (34) jeweils in einer zwischen 0° und 90° zur Horizontalen geneigten Ebene erstrecken.

8. Vorrichtung nach Anspruch 7, **dadurch gekennzeichnet, dass** sich der Verdampfer (32) in einer zwischen 20° und 40° zur Horizontalen geneigten Ebene erstreckt.

9. Vorrichtung nach einem der Ansprüche 1 bis 8, **dadurch gekennzeichnet, dass** sie Einstellmittel (44d, 44g, 48) umfasst, um einen Luftstrom mit eingestellter Temperatur zu erzeugen, der sich aus einer Mischung aus einem warmen Luftstrom, der durch den Heizkörper (34, 36) geströmt ist, und einem kalten Luftstrom, der den Heizkörper (34, 36) umgangen hat, in variablen Anteilen ergibt.

10. Vorrichtung nach Anspruch 9, **dadurch gekennzeichnet, dass** die Heizmittel jedes Mal auf der rechten und der linken Seite einen seitlichen Warmluftkanal (38d, 38g), der durch einen Teil des Heizkörpers (34, 36) verläuft, und einen seitlichen Kaltluftkanal (40d, 40g), der vom seitlichen Warmluftkanal abgezweigt ist, sowie eine seitliche Mischklappe (44d, 44g) umfassen, um den Warmluftstrom in variablen Anteilen in den seitlichen Warmluftkanal und den Kaltluftstrom in den seitlichen Kaltluftkanal zu verteilen, wobei der seitliche Warmluftkanal (38d, 38g) und der seitliche Kaltluftkanal (40d, 40g) gemeinsam einen seitlichen Ausgang (46d, 46g) des Wärmemoduls bilden.

11. Vorrichtung nach Anspruch 10, **dadurch gekennzeichnet, dass** jede seitliche Mischklappe (44d, 44g) in das Wärmemodul (12) eingebaut ist.

12. Vorrichtung nach Anspruch 10, **dadurch gekennzeichnet, dass** jede seitliche Mischklappe in ein Verteilungsmodul (16) eingebaut ist, das sich auf der rechten oder linken Seite in Bezug auf das Wärmemodul (12) befindet.

13. Vorrichtung nach Anspruch 8, **dadurch gekennzeichnet, dass** die Einstellmittel ferner einen zentralen Luftkanal (66) für Warmluft, der einen Teil des Heizkörpers (34, 36) durchquert hat, und einen zentralen Luftkanal (70) für Kaltluft, der vom zentralen Warmluftkanal (66) abgezweigt ist, sowie eine zentrale Mischklappe (72) umfassen, um den Luftstrom, der in den zentralen Warmluftkanal (66) einströmt, und den Luftstrom, der in den zentralen Kaltluftkanal (70) einströmt, in variablen Anteilen zu verteilen, wobei die beiden zentralen Kanäle (66, 70) gemeinsam einen zentralen Ausgang (74) des Wärmemoduls (12) bilden, der derart angeordnet ist, dass er mindestens ein weiteres Verteilungsmodul (76) versorgt, um einen Luftstrom mit eingestellter Temperatur in den hinteren Bereich des Karosseriegehäuses zu verteilen.

14. Vorrichtung nach Anspruch 13, **dadurch gekennzeichnet, dass** die zentrale Mischklappe (72) in dem Wärmemodul (12) eingebaut ist.

15. Vorrichtung nach Anspruch 13, **dadurch gekennzeichnet, dass** die zentrale Mischklappe (72) in dem anderen Verteilungsmodul (76) eingebaut ist.

16. Vorrichtung nach einem der Ansprüche 13 bis 15, **dadurch gekennzeichnet, dass** die Einstellmittel ferner eine Verteilungsklappe (73) umfassen, die zwischen einer ersten Position (73a) zum Schicken des Luftstroms mit eingestellter Temperatur zu dem (den) seitlichen Ausgang (Ausgängen) (46d, 46g) des Wärmemoduls (12), der (die) den vorderen Bereich des Karosseriegehäuses versorgt (versorgen), und einer zweiten Position (73b) zum Schicken des Luftstroms mit eingestellter Temperatur zum zentralen Ausgang (74) des Wärmemoduls (12), der den hinteren Bereich des Karosseriegehäuses versorgt, verschiebbar ist.

17. Vorrichtung nach einem der Ansprüche 1 bis 16, **dadurch gekennzeichnet, dass** sie zwei seitliche Austrittskammern (108d, 108g) umfasst, die stromabwärts zum Heizkörper (34, 36) angeordnet sind und an den seitlichen Ausgängen (46d, 46g) des Wärmemoduls münden.

18. Vorrichtung nach Anspruch 17, **dadurch gekennzeichnet, dass** sie ferner mindestens einen seitlichen Kaltluftkanal (112d, 112g) umfasst, um direkt einen Kaltluftstrom, der im Wärmemodul (12) stromaufwärts zum Heizkörper (34) entnommen wird, zu einem Verteilungsmodul (16) zu leiten, das auf der rechten oder linken Seite eingebaut ist.

19. Vorrichtung nach Anspruch 17, **dadurch gekennzeichnet, dass** sie ferner eine zentrale Austrittskammer umfasst, die sich stromabwärts zum Heizkörper (34, 36) befindet und an einem zentralen Ausgang der Wärmegruppe (12) mündet und derart angeordnet ist, dass sie mindestens ein weiteres Verteilungsmodul (76) versorgt, um einen Luftstrom mit eingestellter Temperatur zum hinteren Bereich des Karosseriegehäuses zu verteilen.

20. Vorrichtung nach Anspruch 17, **dadurch gekennzeichnet, dass** sie ferner mindestens einen zentralen Kaltluftkanal umfasst, um direkt einen Kaltluftstrom, der in dem Wärmemodul (12) stromaufwärts zum Heizkörper (34) entnommen wird, zu dem anderen Verteilungsmodul (76) oder zu einem zu kühlenden Abteil zu leiten.

21. Vorrichtung nach einem der Ansprüche 1 bis 17, **dadurch gekennzeichnet, dass** das (die) Verteilungsmodul(e) (16) jeweils einen unteren Ausgang (56), der zu den Füßen mündet, einen oberen Ausgang (54), der zur Windschutzscheibe mündet, und mindestens einen Zwischenausgang (58), der frontal mündet, hat (haben).

22. Vorrichtung nach einem der Ansprüche 1 bis 8, **dadurch gekennzeichnet, dass** sie Einstellmittel (104) umfasst, die auf die Menge und somit die Temperatur eines flüssigen Kühlmittels, das durch den Heizkörper (34) strömt, einwirken, um einen Luftstrom mit eingestellter Temperatur zu erzeugen.

23. Vorrichtung nach Anspruch 22, **dadurch gekennzeichnet, dass** sie zwei seitliche Austrittskammern (108d, 108g) umfasst, die sich stromabwärts zum Heizkörper (34, 36) befinden und jeweils an den seitlichen Ausgängen (46d, 46g) des Wärmemoduls münden.

24. Vorrichtung nach Anspruch 23, **dadurch gekennzeichnet, dass** sie ferner mindestens einen seitlichen Kaltluftkanal (112d, 112g) umfasst, um direkt einen Kaltluftstrom, der im Wärmemodul (12) stromaufwärts zum Heizkörper (34) entnommen wurde, zu einem Verteilungsmodul (16) zu leiten, das auf der rechten oder linken Seite eingebaut ist.

25. Vorrichtung nach Anspruch 23, **dadurch gekennzeichnet, dass** sie ferner eine zentrale Austrittskammer umfasst, die sich stromabwärts zum Heizkörper (34, 36) befindet und an einem zentralen Ausgang der Wärmegruppe (12) mündet und derart angeordnet ist, dass sie mindestens ein weiteres Verteilungsmodul (76) versorgt, um einen Luftstrom mit eingestellter Temperatur zum hinteren Bereich des Karosseriegehäuses zu leiten.

26. Vorrichtung nach Anspruch 23, **dadurch gekennzeichnet, dass** sie ferner mindestens einen zentralen Kaltluftkanal umfasst, um direkt einen Kaltluftstrom, der in dem Wärmemodul (12) stromaufwärts zum Heizkörper (34) entnommen wurde, zu dem anderen Verteilungsmodul (76) oder einem zu kühlenden Abteil zu leiten.

27. Vorrichtung nach einem der Ansprüche 1 bis 23, **dadurch gekennzeichnet, dass** das (die) Verteilungsmodul (e) jeweils einen unteren Ausgang (56), der zu den Füßen mündet, einen oberen Ausgang (54), der zur Windschutzscheibe mündet, und mindestens einen Zwischenausgang (58), der frontal mündet, hat (haben).

28. Vorrichtung nach einem der Ansprüche 1 bis 27, **dadurch gekennzeichnet, dass** die Module (12, 14, 16), aus denen sie gebildet ist, in einen Querträger (128) des Fahrzeugs eingebaut sind.

## Claims

1. Heating-ventilation and/or air-conditioning device for the passenger compartment of a motor vehicle, which comprises means for producing a flow of blown air at an adjusted temperature, and also de-icing, ventilation and foot heater outlets that are supplied with this stream of temperature-adjusted air, is suitable for being connected to vents opening into the passenger compartment and is composed of modules grouped together substantially at the same horizontal level and comprising:
- at least one ventilation module (14) designed to produce a stream of blown air;
- at least one thermal module (12) designed to be fitted into a central region of the passenger compartment and comprising an air inlet (28) for the blown air, heat exchangers (32, 34, 36) suitable for the flow of air to pass through them, and at least one lateral air outlet (46d, 46g); and
- at least one distribution module (16) having an inlet (50) connected to a lateral air outlet (46d, 46g) of the thermal module and including distribution means for distributing the flow of air between air outlets (54, 56, 58) opening into chosen regions of the passenger compartment,
**characterized in that** the thermal module (12) includes two lateral air outlets (46d, 46g) opening on the right-hand side and on the left-hand side respectively, and **in that** the device comprises two distribution modules (16) designed to be fitted on the right-hand side and on the left-hand side of the thermal module respectively, each having an inlet (50) connected to a lateral air outlet (46d, 46g) of the thermal module.

2. Device according to Claim 1, **characterized in that** the ventilation module (14) is placed alongside the thermal module (12) in the transverse direction (Y axis) of the vehicle.

3. Device according to Claim 1, **characterized in that** the ventilation module (14) is placed alongside the thermal module (12) in the longitudinal direction (X axis) of the vehicle.

4. Device according to one of Claims 1 to 3, **characterized in that** the ventilation module (14) comprises an air intake block (18) for external air and/or recirculated air, a turbine (22) for producing a flow of blown air, and an outlet duct (26) for bringing the flow of blown air to the inlet (28) of the thermal module.

5. Device according to one of Claims 1 to 4, **characterized in that** the inlet (28) of the thermal module (12) is located in the lower part of the latter and **in that** the thermal module (12) houses, in succession from the bottom up, an air-conditioning evaporator (32) and at least one heating radiator (34, 36).

6. Device according to Claim 5, **characterized in that** the thermal module (12) houses a first heating radiator (34), which is placed above the evaporator (32) and through which a hot heat-transfer fluid flows, and a second heating radiator (36) of the electrical type, which is placed above the first heating radiator (34).

7. Device according to either of Claims 5 and 6, **characterized in that** the evaporator (32) and the heating radiator (34) each lie in a plane inclined at between 0° and 90° to the horizontal.

8. Device according to Claim 7, **characterized in that** the evaporator (32) lies in a plane inclined at between 20° and 40° to the horizontal.

9. Device according to one of Claims 1 to 8, **characterized in that** it comprises adjustment means (44d, 44g, 48) for producing a flow of temperature-adjusted air resulting from mixing, in a variable proportion, a flow of hot air that has passed through the heating radiator (34, 36) and a flow of cold air that has by-passed the heating radiator (34, 36).

10. Device according to Claim 9, **characterized in that** the adjustment means, comprise, each time, on the right-hand side and left-hand side, a lateral hot-air channel (38d, 38g) passing through part of the heating radiator (34, 36) and a lateral cold-air channel (40d, 40g) branched off the lateral hot-air channel, and also a lateral mixing flap (44d, 44g) for distributing in a variable proportion the flow of hot air in the lateral hot-air channel and the flow of cold air in the lateral cold-air channel, the lateral hot-air channel (38d, 38g) and the lateral cold-air channel (40d, 40g) together forming a lateral outlet (46d, 46g) of the thermal module.

11. Device according to Claim 10, **characterized in that** each lateral mixing flap (44d, 44g) is fitted into the thermal module (12).

12. Device according to Claim 10, **characterized in that** each lateral mixing flap is fitted into a distribution module (16) located on the right-hand side or the left-hand side with respect to the thermal module (12).

13. Device according to Claim 8, **characterized in that** the adjustment means furthermore include a central air channel (66) for hot air that has passed through part of the heating radiator (34, 36) and a central air channel (70) for cold air branched off the central air channel (66), and also a central mixing flap (72) for distributing in a variable proportion the flow of air going towards the central hot-air channel (66) and the flow of air in the central cold-air channel (70), the two central channels (66, 70) together forming a central outlet (74) of the thermal module (12), said central outlet (74) being designed to supply at least one other distribution module (76) so as to distribute a flow of temperature-adjusted air towards the rear of the passenger compartment.

14. Device according to Claim 13, **characterized in that** the central mixing flap (72) is fitted into the thermal module (12).

15. Device according to Claim 13, **characterized in that** the central mixing flap (72) is fitted in the other distribution module (76).

16. Device according to one of Claims 13 to 15, **characterized in that** the adjustment means furthermore include a distribution flap (73) that can be moved between a first position (73a), for sending the flow of temperature-adjusted air into the lateral outlet(s) (46d, 46g) of the thermal module (12) supplying the front of the passenger compartment, and a second position (73b), for sending the flow of temperature-adjusted air into the central outlet (74) of the thermal module (12) supplying the rear of the passenger compartment.

17. Device according to one of Claims 1 to 16, **characterized in that** it includes two lateral outlet chambers (108d, 108g) located downstream of the heating radiator (34, 36) and terminating in the respective lateral outlets (46d, 46g) of the thermal module.

18. Device according to Claim 17, **characterized in that** it further includes at least one lateral cold-air duct (112d, 112g) for bringing a flow of cold air taken from the thermal module (12), upstream of the heating radiator (34), directly into a distribution module (16) fitted on the right-hand side or the left-hand side.

19. Device according to Claim 17, **characterized in that** it further includes a central outlet chamber located downstream of the heating radiator (34, 36) and terminating in a central outlet of the thermal unit (12), said central outlet chamber being designed to supply at least one other distribution module (76) for distributing a flow of temperature-adjusted air into the rear of the passenger compartment.

20. Device according to Claim 17, **characterized in that** it further includes at least one central cold-air duct for bringing a stream of cold air taken from the thermal module (12), upstream of the heating radiator (34), into the other distribution module (76) or into a compartment to be cooled.

21. Device according to one of Claims 1 to 17, **characterized in that** the distribution module(s) (16) each has (have) a bottom outlet (56) opening towards the feet, a top outlet (54) opening towards the windscreen, and at least one intermediate outlet (58) opening frontally.

22. Device according to one of Claims 1 to 8, **characterized in that** it includes adjustment means (104) acting on the flow rate, and therefore the temperature, of a heat-transfer fluid passing through the heating radiator (34) in order to produce a flow of temperature-adjusted air.

23. Device according to Claim 22, **characterized in that** it includes two lateral outlet chambers (108d, 108g) located downstream of the heating radiator (34, 36) and terminating in the respective lateral outlets (46d, 46g) of the thermal module.

24. Device according to Claim 23, **characterized in that** it further includes at least one lateral cold-air duct (112d, 112g) for bringing a flow of cold air taken from the thermal module (12), upstream of the heating radiator (34), into a distribution module (16) fitted on the right-hand side or the left-hand side.

25. Device according to Claim 23, **characterized in that** it further includes a central outlet chamber located downstream of the heating radiator (34, 36) and terminating in a central outlet of the thermal unit (12), said central outlet chamber being designed to supply at least one other distribution module (76) for distributing a flow of temperature-adjusted air into the rear of the passenger compartment.

26. Device according to Claim 23, **characterized in that** it further includes at least one central cold-air duct for bringing a flow of cold air taken from the thermal module (12), upstream of the heating radiator (34), into the other distribution module (76) or into a compartment to be cooled.

27. Device according to one of Claims 1 to 23, **characterized in that** the distribution module(s) (16) each has(have) a bottom outlet (56) opening towards the feet, a top outlet (54) opening towards the windscreen, and at least one intermediate outlet (58) opening frontally.

28. Device according to one of Claims 1 to 27, **characterized in that** the modules (12, 14, 16) making up the device are incorporated into a transverse member (128) of the vehicle.
